(19) Europäisches Patentamt
European Patent Office
Office européen des brevets

(11) Veröffentlichungsnummer: **0 321 853 B1**

(12) # EUROPÄISCHE PATENTSCHRIFT

(45) Veröffentlichungstag der Patentschrift: **18.12.91**

(51) Int. Cl.$^5$: **C08F 10/00**, C08F 4/64

(21) Anmeldenummer: **88120952.2**

(22) Anmeldetag: **15.12.88**

(54) **1-Olefinstereoblockpolymerwachs und Verfahren zu seiner Herstellung.**

(30) Priorität: **21.12.87 DE 3743320**

(43) Veröffentlichungstag der Anmeldung:
**28.06.89 Patentblatt 89/26**

(45) Bekanntmachung des Hinweises auf die Patenterteilung:
**18.12.91 Patentblatt 91/51**

(84) Benannte Vertragsstaaten:
**BE DE ES FR GB IT NL**

(56) Entgegenhaltungen:
**EP-A- 0 185 918**
**EP-A- 0 269 987**
**EP-A- 0 302 424**
**US-A- 4 522 982**

(73) Patentinhaber: **HOECHST AKTIENGESELLSCHAFT**
**Postfach 80 03 20**
**W-6230 Frankfurt am Main 80(DE)**

(72) Erfinder: **Winter, Andreas, Dr.**
**Gundelhardtstrasse 2**
**W-6233 Kelkheim (Taunus)(DE)**
Erfinder: **Antberg, Martin, Dr.**
**Sachsenring 10**
**W-6238 Hofheim am Taunus(DE)**
Erfinder: **Rohrmann, Jürgen, Dr.**
**Sepp-Herberger-Strasse 17**
**W-8056 Neufahrn(DE)**

EP 0 321 853 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf 1-Olefinstereoblockpolymerwachse mit enger Molmassenverteilung $M_w/M_n$ und ein Verfahren zu ihrer Herstellung.

Stereoblockpolymere sind Homopolymere, in deren Molekülketten isotaktische Sequenzen mit entgegengesetzter Konfiguration miteinander abwechseln.

Bekannt ist ein Verfahren zu Herstellung von blockartig aufgebautem Polypropylen, in welchem die isotaktischen Sequenzen 2 bis 17 Monomereinheiten lang sind (vgl. US-PS 4 522 982). Als Katalysator wird ein Metallocen eines Metalls der Gruppe 4b, 5b oder 6b des Periodensystems, beispielsweise Titan, Vanadium oder Hafnium, insbesondere Titan, eingesetzt. Dieses Metallocen ist eine Mono-, Di-oder Tricyclopentadienyl- oder substituierte Cyclopentadienyl-Metallverbindung. Als Cokatalysator dient ein Aluminoxan.

Allerdings sind die bevorzugt verwendeten Titanocene in verdünnter Lösung nicht ausreichend thermisch stabil, um in einem technischen Verfahren anwendbar zu sein. Schließlich müssen die Cokatalysatoren in vergleichsweise hoher Konzentration eingesetzt werden, um eine ausreichende Kontaktausbeute zu erreichen, was dazu führt, daß die im Polymerprodukt enthaltenden Katalysatorreste in einem separaten Reinigungsschritt entfernt werden müssen.

Die Herstellung von höherisotaktischen Polyolefinwachsen (Isotakt. Index 80 - 85 %, Schmelzenthalpie 63 J/g, Mischungen aus ataktischen und isotaktischen Polyolefinketten) mittels Trägerkatalysator, Cokatalysator und Stereoregulator bei Temperaturen von über 95 °C ist bekannt (vgl. DE-A 31 48 229). Als Molmassenregler müssen jedoch große Mengen Wasserstoff eingesetzt werden, da derartige Katalysatorsysteme ihre größte Wirksamkeit im Bereich hochmolekularer Polyolefinkunststoffe entfalten. Zum Erreichen von für Wachse typischen Polymerisationsgraden werden Partialdruckverhältnisse Propylen : Wasserstoff von $\leq$ 1 benötigt.

Es ist bekannt, daß unter solchen Reaktionsbedingungen eine Hydrierung von Propylen zu Propan in nennenswertem Umfang auftritt und somit zu deutlichen Propylenverlusten führt. Die geringen Katalysatoraktivitäten, die unter diesen Reaktionsbedingungen erreicht werden, führen zu hohen Restaschegehalten und insbesondere extrem hohen Chlorgehalten im Wachsprodukt und erfordern aufwendige Reinigungsschritte zur Entfernung.

Es ist weiterhin ein $MgCl_2$-Trägerkontakt bekannt, der zu kristallinen PP-Wachsen mit enger Molmassenverteilung führt (JP 59/206 409). Nachteil dieses Katalysators ist jedoch ebenfalls eine schlechte Ansprechbarkeit auf Wasserstoff, es sind sehr große Mengen an Wasserstoff zur Molmassenregulierung erforderlich. Daraus resultiert eine schlechte Raumzeitausbeute sowie eine vergleichsweise geringe Aktivität. Außerdem werden in den Polymerwachsen relativ hohe Chlorgehalte von teilweise über 1000 ppm gefunden, sofern die Katalysatorrückstände nicht durch eine spezielle Nachbehandlung entfernt werden. Auch hier führen die hohen Wasserstoffpartialdrücke im nennenswerten Umfang zur Hydrierung von Propylen zu Propan und somit zu deutlichen Propylenverlusten.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE 37 26 067).

Weiterhin wurde vorgeschlagen, zur Herstellung von 1-Olefinstereoblockpolymeren ein. Metallocen mit mehreren Chiralitätszentren zu verwenden (vgl. DE 36 40 948).

Ferner ist aus der Literatur bekannt, daß die Molmasse von Polyolefinen, die mit Metallocen/Aluminoxan hergestellt werden, über die Polymerisationstemperatur gesteuert werden kann. Eine hohe Polymerisationstemperatur führt dabei zu einer niedrigen Molmasse. Versuche haben nun gezeigt, daß bei Metallocen/Aluminoxan-Katalysatoren der technisch zur Verfügung stehende Temperaturbereich nicht ausreicht, um den für Wachstypen wichtigen Molmassenbereich zu erfassen und zu überdecken.

Ein weiterer Nachteil bei der Verwendung von Polyolefinen, die mittels Metallocen/Aluminoxansystemen hergestellt wurden, ist die Tatsache, daß die beim Kettanabbruch entstehenden Kettenenden immer eine ungesättigte Gruppe aufweisen.

Aus der Literatur ist bekannt, daß metallorganische Verbindungen, wie etwa $AlR_3$ oder $ZnR_2$ auch in Verbindung mit Metallocen/Aluminoxan-Systemen Kettenabruchreaktionen auslösen können. Versuche haben jedoch gezeigt, daß die Katalysatoraktivitäten jedoch meist drastisch absinken und zudem durch die notwendige Zugabe größerer Mengen dieser Molmassenregulatoren der unerwünschte Restaschegehalt in Wachs stark ansteigt. Einzig $AlMe_3$ läßt die Kontaktaktivität ansteigen, die Wirkung als Molmassenregulator ist jedoch unbefriedigend und der notwendige Einsatz großer Mengen führt ebenfalls zu einem Anstieg des Restaschegehalts im Polymeren.

Es bestand die Aufgabe, ein Verfahren zu finden, mit dessen Hilfe in Direktsynthese unter Verwendung

von Metallocen/Aluminoxan-Katalysatoren Stereoblockpolymerwachse mit gesättigten Kettenenden hergestellt werden können.

Gefunden wurde, daß die Aufgabe gelöst werden kann, wenn als Molmassenregler Wasserstoff in einem bestimmten molverhältnis 1-Olefin/$H_2$ verwendet wird. Die verwendeten Metallocene weisen eine überraschend hohe Empfindlichkeit für Wasserstoff auf, so daß mit geringen Mengen Wasserstoff Wachse erzeugt werden können.

Die Erfindung betrifft somit ein Stereoblockpolymerwachs, bestehend aus Einheiten, welche sich von einem 1-Olefin der Formel $RCH=CH_2$, worin R einen Alkylrest mit 1 bis 28 C-Atomen bedeutet, ableiten, mit alternierenden isotaktischen entgegengesetzt konfigurierten Sequenzen mit einer Länge von 3 oder mehr Monomereinheiten in der Molekülkette, mit einer Molmassenverteilen $M_w/M_n$ von 1,8 bis 3,0 und einer Viskositätszahl von 2 bis 60 $cm^3/g$.

Die Erfindung betrifft weiterhin ein Verfahren zur Herstellung eines 1-Olefin-Stereoblockpolymerwachses durch Polymerisation eines 1-Olefins der Formel $R-CH=CH_2$, worin R einen Alkylrest mit 1 bis 28 C-Atomen ist, ein- oder mehrstufig bei einer Temperatur von -50 bis 200° C, bei einem Druck von 0,5 bis 120 bar, in Lösung, in Suspension oder in der Gasphase, in Gegenwart eines Katalysators, welcher aus einer Übergangsmetallverbindung und einem Aluminoxan besteht, dadurch gekennzeichnet, daß die Polymerisation in Gegenwart eines Katalysators durchgeführt wird, dessen Übergangsmetallverbindung eine Metallocenverbindung der Formel I ist

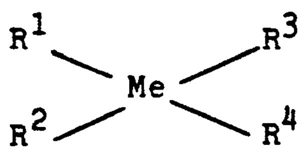

(I),

worin

$R^1$ und $R^2$ gleich oder verschieden sind und ein Halogenatom, $C_1$-$C_{10}$-Alkyl, $C_6$-$C_{10}$-Aryl, $C_2$-$C_{10}$-Alkenyl, $C_7$-$C_{40}$-Arylalkyl, $C_7$-$C_{40}$-Alkylaryl oder $C_8$-$C_{40}$-Alkenylaryl bedeuten,

$R^3$ und $R^4$ gleich oder verschieden sind und einen substituierten Cyclopentadienylrest bedeuten, wobei dieser Rest ein oder mehrere Chiralitätszentren enthält und durch Umsetzung von Alkalicyclopentadienid mit einem chiralen Alkohol entstanden ist und Me Titan, Zirkon oder Hafnium ist, und vor der Polymerisation mit einem Aluminoxan der Formel II

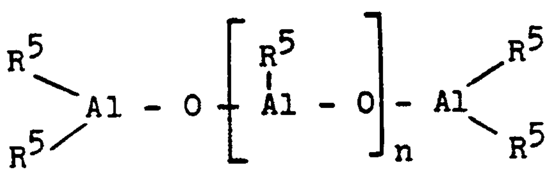

(II)

für den linearen Typ und/oder ein solches der Formel III

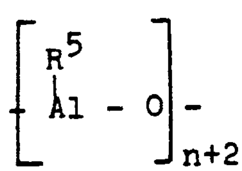

(III)

für den cyclischen Typ, wobei in den Formeln II und III $R^5$ Methyl, Ethyl oder Isobutyl bedeutet und n eine ganze Zahl von 5 bis 40 ist, bei einer Temperatur von -78 bis 100° C 5 Minuten bis 60 Minuten voraktiviert wurde, und wobei der Aktivator ebenfalls ein Aluminoxan der Formeln II oder III ist, und Wasserstoff im Molverhältnis 1-Olefin/$H_2$ von 3 bis 3000 zugegen ist.

Zur Herstellung des erfindungsgemäßen Stereoblockpolymerwachses wird ein Metallocen der Formel (I) eingesetzt:

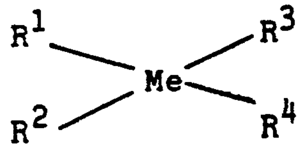 (I).

In dieser Formel ist Me Titan, Zirkon oder Hafnium.

$R^1$ und $R^2$ sind gleich oder verschieden und bedeuten ein Halogenatom, $C_1$-$C_{10}$-Alkyl, $C_6$-$C_{10}$-Aryl, $C_2$-$C_{10}$-Alkenyl, $C_7$-$C_{40}$-Arylalkyl, $C_7$-$C_{40}$-Alkylaryl oder $C_8$-$C_{40}$-Alkenylaryl.

$R^3$ und $R^4$ sind gleich oder verschieden und bedeuten einen substituierten Cyclopentadienylrest, wobei dieser Rest ein oder mehrere Chiralitätszentren enthält und durch Umsetzen von Alkalicyclopentadienid mit einem chiralen Alkohol entstanden ist.

$R^3$ und $R^4$ können auch durch eine $C_1$-$C_2$-Alkylenbrücke oder eine $R^6_2$ Si-Brücke verbunden sein. $R^6$ bedeutet $C_1$-$C_{10}$-Alkyl, $C_6$-$C_{10}$-Aryl, $C_2$-$C_{10}$-Alkenyl, $C_7$-$C_{40}$-Arylalkyl, $C_7$-$C_{40}$-Alkylaryl oder $C_8$-$C_{40}$-Alkenylaryl.

In Formel I ist Me vorzugsweise Zirkon oder Hafnium und $R^1$ und $R^2$ bedeuten vorzugsweise ein Halogenatom oder eine Alkylgruppe, vorzugsweise Methyl, insbesondere ein Chloratom. $R^3$ und $R^4$ sind durch Umsetzung eines Alkalicyclopentadienids, vorzugsweise Natriumcyclopentadienids, und beispielsweise einem der folgenden chiralen Alkohole entstanden:

Thujylalkohol; Neothujylalkohol; cis-, trans-Sabinol; 2,5-Dimethyl-4-vinyl-2,5-hexadien-1-ol; Lavandulol; Isopulegol; Neoisopulegol; cis-, trans-Pulegol; Isomenthol, Neomenthol; Neoisomenthol; Menthol; cis-, trans-$\Delta^1$-(7)-p-Menthenol-(2); cis-, trans-$\Delta^1$(7)8-p-Menthadienol-(2); Dihydrocarveol; Neodihydrocarveol; Isodihydrocarveol; Neoisodihydrocarveol; Carvomenthol; Neoisocarvomenthol; Isocarvomenthol; Neocarvomenthol; Perilla-Alkohol; Phellandrol; Butanol-(2); Cycloisolongifolol; Isolongifolol; 2-Methylbutanol; Octanol-(2); Pentanol-(2); Phenylethanol; Hydroxycitronellal; Hydroxycitronellol; cis-, trans-Myrtenol; 2,6-Dimethylocten-(3)-diol-(2,8); 2,6-Dimethylocten-(1)-diol-(3,8); Dihydrocitronellol; Citronellol; 2,6-Dimethyloctadien-(2,7)-ol-(4); 2,6-Dimethyloctadien-(1,7)-ol-(3); $\Delta^{1,8}$-p-Menthadienol-(9); $\Delta^1$-p-Menthenol-(9); cis-, trans-Sobrerol; cis-m-Menthanol-(5), $\Delta^{4/10}$-Carenol-(5); $\Delta^3$-Carenol-(2); Caranol-(3); Isocaranol-(3); Neocaranol-(3); Neoisocaranol-(3); $\alpha$, $\beta$-Fenchol; Borneol; Isoborneol; cis-, trans-Myrtanol; Neoverbanol; Neoisoverbanol; cis-, trans-Chrysanthenol; cis-, trans-Verbenol; Isoverbanol; cis-, trans-Pinocarveol; Pinocampheol; Neopinocampheol; Isopinocampheol; Neoisopinocampheol; Methylnopinol.

Von diesen chiralen Alkoholen werden die cyclischen bevorzugt eingesetzt. Besonders bevorzugt ist Neomenthol. Somit ist die bevorzugt verwendete Metallocenverbindung Bis-(neomenthylcyclopentadienyl)-zirkoniumdichlorid, Bis-(neoisomenthylcyclopentadienyl)zirkoniumdichlorid oder Bis-(cis-myrtanylcyclopentadienyl)zirkoniumdichlorid, besonders bevorzugt Bis-(neomenthylcyclopentadienyl)zirkoniumdichlorid.

Die Herstellung dieser Verbindungen kann beispielsweise auf folgende Weise erfolgen:

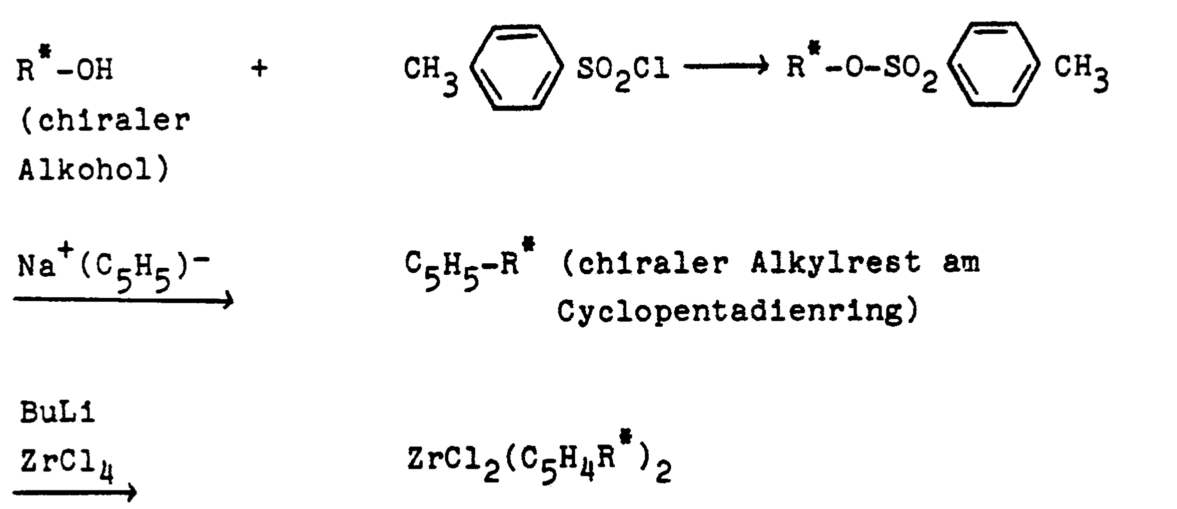


Vor dem Einsatz in der Polymerisationsreaktion wird das Metallocen mit einem Aluminoxan voraktiviert. Dieses Aluminoxan ist eine Verbindung der Formel II

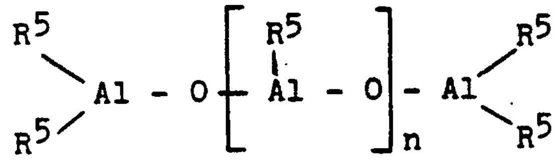 (II)

für den linearen Typ und/oder der Formel III

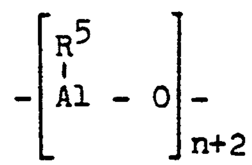 (III)

für den cyclischen Typ. In diesen Formeln bedeuten $R^5$ eine $C_1$-$C_6$-Alkylgruppe, vorzugsweise Methyl, Ethyl oder Isobutyl, insbesondere Methyl, und n eine ganze Zahl von 5 bis 40, vorzugsweise 15 bis 35.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und das Toluol unter Vakuum abdestilliert. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von der kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 18 bzw. 16 mol $H_2O$/mol $Al_2(SO_4)_3$.

Die Voraktivierung wird in Lösung vorgenommen. Bevorzugt wird dabei das Metallocen in einer Lösung des Aluminoxans in einem inerten Kohlenwasserstoff aufgelöst. Als inerte Kohlenwasserstoffe eignen sich aliphatische und aromatische Kohlenwasserstoffe.

Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Minuten, vorzugsweise 10 - 20 Minuten.

Eine deutlich längere Voraktivierung ist möglich, sie wirkt sich normalerweise jedoch weder aktivitätssteigernd noch aktivitätsmindernd aus und hat insbesondere auf die Molmasse des erzeugten Polyolefinwachses keinen Einfluß, kann jedoch zu Lagerzwecken durchaus sinnvoll sein. Die Voraktivierung wird bei einer Temperatur von -78 bis 100 °C, vorzugsweise 0 bis 70 °C durchgeführt.

Die Voraktivierung kann sowohl unter Ausschluß von Licht, als auch bei Lichteinstrahlung erfolgen, da die in der Regel lichtempfindlichen Metallocene durch das Aluminoxan stabilisiert werden. Bevorzugt ist trotzdem, besonders bei längeren Voraktivierungszeiten und bei besonders empfindlichen Metallocenen direkte Lichteinstrahlung auszuschließen.

Die zweite Komponente des erfindungsgemäß zu verwendenden Katalysators ist ein Aluminoxan der Formeln (II) und/oder (III). Vorzugsweise wird das gleiche Aluminoxan zur Voraktivierung und zur Polymerisation verwendet.

Der erfindungsgemäß zu verwendende Katalysator wird zur Polymerisation von 1-Olefinen der Formel

$R\text{-}CH=CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen. Ferner wird der Katalysator auch zur Copolymerisation dieser Olefine untereinander und mit Ethylen eingesetzt, wobei mehr als 50 Gew.-% Ethylen einpolymerisiert werden können.

Die Polymerisation wird in bekannter Weise in flüssigem Monomeren, in Lösung, in Suspension oder in der Gasphase, kontinuierlich oder diskontinuierlich, ein- oder mehrstufig bei einer Temperatur von -50 bis 200 °C, vorzugsweise -20 bis 120, insbesondere -20 bis 80 °C, durchgeführt.

Als Molmassenregulator wird Wasserstoff zugegeben. Der Wasserstoffpartialdruck liegt dabei zwischen 0,05 und 50 bar, vorzugsweise 0,1 bis 25 bar, insbesondere 0,5 bis 10 bar.

Das Molverhältnis 1-Olefin zu Wasserstoff beträgt somit 3 bis 3000, vorzugsweise 6 bis 1500, insbesondere 15 bis 300.

Der Gesamtdruck im Polymerisationssystem beträgt somit 0,5 bis 120 bar. Bevorzugt ist die Polymerisation in dem technisch besonders interessanten Druckbereich von 5 bis 100 bar.

Die Metallocenverbindung wird in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösmittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $2 \cdot 10^{-2}$ mol pro $dm^3$ Lösemittel bzw. pro $dm^3$ Reaktorvolumen verwendet. Prinzipiell sind aber auch höhere Konzentrationen möglich.

Es ist vorteilhaft, das Aluminoxan vor Zugabe des Metallocens in das Polymerisationssystem erst einige Minuten zusammen mit der Polymerisationsflüssigphase zu rühren. Die Rührzeit beträgt vorzugsweise 10 bis 30 Minuten. Es kann jedoch ohne größere Einbußen auch kürzere Zeit gerührt werden, eine längere Rührzeit hat auf das Ergebnis der Polymerisation keine nennenswerte Wirkung.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt.

Die Dauer der Polymerisation ist beliebig, da das erfindungsgemäß zu verwendende Katalysatorsystem einen nur geringen zeitabhängigen Abfall der Polymerisationsaktivität zeigt.

Im erfindungsgemäßen Verfahren führt die Verwendung von Wasserstoff als Molmassenregulator zu einer drastischen Erhöhung der Katalysatoraktivität. Gleichzeitig kann die Molmasse im gewünschten Bereich exakt gesteuert werden. Die Molmassenverteilung $M_w/M_n$ ist dabei mit Werten zwischen 1,8 und 3,0 extrem eng. Die erfindungsgemäße Verwendung von Wasserstoff führt gleichzeitig zu einer deutlichen Erniedrigung des Restaschegehalts. Es kann mit dem erfindungsgemäßen Verfahren ein Polyolefinwachs hergestellt werden, das Stereoblockstruktur aufweist. In den Molekülketten alternieren isotaktisch entgegengesetzte Sequenzen mit einer Länge von 3 oder mehr Monomereinheiten. Generell sind die Kettenenden aus gesättigten Kohlenwasserstoffgruppen aufgebaut.

Stereoblockpolymerwachse liegen bei Raumtemperatur in Form wachsiger Feststoffe oder hochviskoser Flüssigkeiten vor. Die Viskositätszahlen liegen im Bereich von 2 bis 60, vorzugsweise 4 bis 30, insbesondere 5 bis 20 $cm^3/g$.

Die nachfolgenden Beispiele sollen die Erfindung erläutern. Es bedeuten

VZ = Viskositätszahl in $cm^3/g$

$M_w$ = Molmassengewichtsmittel

$M_n$ = Molmassenzahlenmittel

$M_w/M_n$ = Molmassenverteilung

} ermittelt durch Gelpermeations-chromatographie

SD = Schüttdichte des Polymerpulvers in $g/dm^3$

II = Isotaktischer Index, bestimmt durch $^{13}C$-NMR-Spektroskopie

$n_{iso}$ = Länge der isotaktischen Sequenzen, bestimmt durch $^{13}C$-NMR-Spektroskopie.

**Beispiel 1**

Ein trockener 16-$dm^3$-Kessel wurde mit Stickstoff gespült und mit 40 $Ndm^3$ (entsprechend 2,5 bar) Wasserstoff sowie mit 10 $dm^3$ flüssigem Propylen befüllt. Dann wurden 70 $cm^3$ toluolische Methylaluminoxanlösung (entsprechend 68 mmol Al, mittlerer Oligomerisierungsgrad n = 30) zugegeben und der Ansatz bei 30 °C 15 Minuten gerührt.

Parallel dazu wurden 100 mg (0,176 mmol) Bis-(-)-neomenthylcyclopentadienylzirkondichlorid in 35 $cm^3$ toluolisoher Methylaluminoxanlösung (34 mmol Al) gelöst und durch 15-minütiges Stehenlassen voraktiviert.

Die Lösung wurde dann in den Kessel gegeben. Das Polymerisationssystem wurde auf eine Temperatur von 50 °C gebracht und dann 2 h bei dieser Temperatur gehalten.

Es wurden 2,45 kg Polypropylenwachs erhalten. Die Aktivität des Metallocens betrug somit 7,0 kg PP-Wachs/mmol Zr x h oder 12,3 kg PP-Wachs/g Metallocen x h.

VZ = 5,9 $cm^3/g$; $M_w$ = 2520, $M_n$ = 1200, $M_w/M_n$ = 2,1;
II = 62 %, $n_{iso}$ = 3,0; keine ungesättigten Kettenenden.

**Beispiel 2**

Es wurde analog zu Beispiel 1 verfahren, statt 40 $Ndm^3$ (entsprechend 2,5 bar) Wasserstoff wurden 16 $Ndm^3$ (entsprechend 1 bar) Wasserstoff verwendet.
Es wurden 2,20 kg Polypropylenwachs erhalten. Die Aktivität des Metallocens betrug somit 6,3 kg PP-Wachs/mmol Zr x h oder 11,0 kg PP-Wachs/g Metallocen x h.
VZ = 9,8 $cm^3/g$, $M_w$ = 3260, $M_n$ = 1600, $M_w/M_n$ = 2,0;
II = 60 %, $n_{iso}$ = 3,1; keine ungesättigten Kettenenden.

**Beispiel 3**

Es wurde analog zu Beispiel 1 verfahren, statt 40 $Ndm^3$ (entsprechend 2,5 bar) Wasserstoff wurden 4 $Ndm^3$ (entsprechend 0,25 bar) Wasserstoff verwendet.
Es wurden 1,98 kg Polypropylenwachs erhalten. Die Aktivität des Metallocens betrug somit 5,7 kg PP-Wachs/mmol Zr x h oder 9,9 kg PP-Wachs/g Metallocen x h.
VZ = 12,4 $cm^3/g$, $M_w$ = 4760, $M_n$ = 2150, $M_w/M_n$ = 2,2;
II = 69 %, $n_{iso}$ = 3,5; keine ungesättigten Kettenenden.

**Beispiel 4**

Es wurde analog zu Beispiel 1 verfahren, als Metallocen wurde jedoch Bis-(neoisomenthylcyclopentadienyl)zirkondichlorid (100 mg, 0,176 mmol) eingesetzt.
Es wurden 2,33 kg Polypropylenwachs erhalten. Die Aktivität des Metallocens betrug somit 6,7 kg PP-Wachs/mmol Zr x h oder 11,6 kg PP-Wachs/g Metallocen x h.
VZ = 6,2 $cm^3/g$; $M_w$ = 2420, $M_n$ = 1160, $M_w/M_n$ = 2;
II = 67 %, $n_{iso}$ = 4,0; keine ungesättigen Kettenenden.

**Beispiel 5**

Es wurde analog zu Beispiel 1 verfahren, als Metallocen wurde jedoch Bis-(cis-myrtanylcyclopentadienyl)zirkondichlorid (200 mg, 0,354 mmol) eingesetzt.
Es wurden 1,79 kg Polypropylenwachs erhalten. Die Aktivität des Metallocens betrug somit 2,5 kg PP-Wachs/mmol Zr x h oder 4,5 kg PP-Wachs/g Metallocen x h.
VZ = 4,7 $cm^3/g$; $M_w$ = 1530, $M_n$ = 875, $M_w/M_n$ = 1,8;
II = 58 %, $n_{iso}$ = 3,0; keine ungesättigten Kettenenden.

**Vergleichsversuch A**

Es wurde analog zu Beispiel 1 verfahren, statt Wasserstoff wurden jedoch 50 mmol Diethylzink in 50 $cm^3$ Toluol zudosiert. Polypropylen war nur in Spuren gebildet worden. Im überwiegenden Maße handelte es sich bei dem isolierten Feststoff um Zersetzungsprodukte des Aluminoxans und des Diethylzinks.

**Vergleichsversuch B**

Es wurde analog zu Beispiel 1 verfahren, es wurde jedoch kein Wasserstoff verwendet. Es wurden 1,10 kg Polypropylen erhalten. Die Aktivität des Metallocens betrug somit 3,1 kg PP/mmol Zr x h oder 5,5 kg PP/g Metallocen x h.
VZ = 26,2 $cm^3/g$; $M_w$ = 19600, $M_n$ = 8500, $M_w/M_n$ = 2,3;
II = 58 %, $n_{iso}$ = 3,0; pro Polypropylenkette ein ungesättigtes Kettenende (bestimmt durch $^{13}$C-NMR).

**Patentansprüche**

**Patentansprüche für folgende Vertragsstaaten : BE, DE, FR, GB, IT, NL**

1. Stereoblockpolymerwachs, bestehend aus Einheiten, welche sich von einem 1-Olefin der Formel $RCH=CH_2$, worin R ein Alkylrest mit 1 bis 28 C-Atomen bedeutet, ableiten, mit alternierenden isotaktischen entgegengesetzt konfigurierten Sequenzen mit einer Länge von 3 oder mehr Monomereinheiten in der Molekülkette, mit gesättigten Kettenenden, mit einer Molmassenverteilung $M_w/M_n$ von 1,8 bis 3,0 und einer Viskositätszahl von 2 bis 60 $cm^3/g$, bei dessen Herstellung Wasserstoff im Molverhältnis 1-Olefin/$H_2$ von 3 bis 3000 zugegen ist.

2. Verfahren zur Herstellung eines 1-Olefin-Stereoblockpolymerwachses gemäß Anspruch 1, durch Polymerisation eines 1-Olefins der Formel $R\text{-}CH=CH_2$, worin R ein Alkylrest mit 1 bis 28 C-Atomen ist, ein- oder mehrstufig bei einer Temperatur von -50 bis 200 °C, bei einem Druck von 0,5 bis 120 bar, in Lösung, in Suspension oder in der Gasphase, in Gegenwart eines Katalysators, welcher aus einer Übergangsmetallverbindung und einem Aluminoxan besteht, dadurch gekennzeichnet, daß die Polymerisation in Gegenwart eines Katalysators durchgeführt wird, dessen Übergangsmetallverbindung eine Metallocenverbindung der Formel I ist

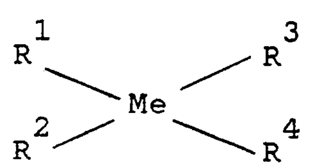

(I),

worin
$R^1$ und $R^2$ gleich oder verschieden sind und ein Halogenatom, $C_1$-$C_{10}$-Alkyl, $C_6$-$C_{10}$-Aryl, $C_2$-$C_{10}$-Alkenyl, $C_7$-$C_{40}$-Arylalkyl, $C_7$-$C_{40}$-Alkylaryl oder $C_8$-$C_{40}$-Alkenylaryl bedeuten,
$R^3$ und $R^4$ gleich oder verschieden sind und einen substituierten Cyclopentadienylrest bedeuten, wobei dieser Rest ein oder mehrere Chiralitätszentren enthält und durch Umsetzung von Alkalicyclopentadienid mit einem chiralen Alkohol entstanden ist und Me Titan, Zirkon oder Hafnium ist, und vor der Polymerisation mit einem Aluminoxan der Formel II

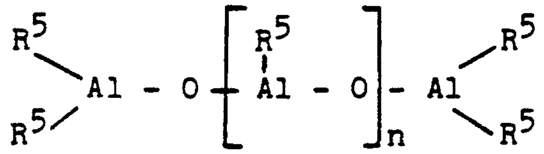

(II)

für den linearen Typ und oder ein solches der Formel III

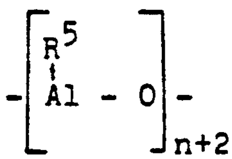

(III)

für den cyclischen Typ, wobei in den Formeln II und III $R^5$ Methyl, Ethyl oder Isobutyl bedeutet und n eine ganze Zahl von 5 bis 40 ist, bei einer Temperatur von -78 bis 100 °C 5 Minuten bis 60 Minuten voraktiviert wurde, und wobei der Aktivator ebenfalls ein Aluminoxan der Formeln II oder III ist, und Wasserstoff im Molverhältnis 1-Olefin/$H_2$ von 3 bis 3000 zugegen ist.

**3.** Verfahren nach Anspruch 2, dadurch gekennzeichnet, daß das 1-Olefin Propylen ist.

**4.** Verfahren nach Anspruch 2, dadurch gekennzeichnet, daß die Metallocenverbindung eine Verbindung des Zirkons ist.

**5.** Verfahren nach Anspruch 2, dadurch gekennzeichnet, daß die Metallocenverbindung Bis-(neomenthylcyclopentadienyl)zirkoniumdichlorid, Bis-(neoisomenthylcyclopentadienyl)zirkoniumdichlorid oder Bis-(cis-myrtanylcylopentadienyl)zirkoniumdichlorid ist.

**Patentansprüche für folgenden Vertragsstaat : ES**

**1.** Verfahren zur Herstellung eines 1-Olefin-Stereoblockpolymerwachses, bestehend aus Einheiten, welche sich von einem 1-Olefin der Formel $RCH=CH_2$, worin R ein Alkylrest mit 1 bis 28 C-Atomen bedeutet, ableiten, mit alternierenden isotaktischen entgegengesetzt konfigurierten Sequenzen mit einer Länge von 3 oder mehr Monomereinheiten in der Molekülkette, mit gesättigten Kettenenden mit einer Molmassenverteilung $M_w/M_n$ von 1,8 bis 3,0 und einer Viskositätszahl von 2 bis 60 $cm^3/g$, durch Polymerisation eines 1-Olefins der Formel $R-CH=CH_2$, worin R ein Alkylrest mit 1 bis 28 C-Atomen ist, ein- oder mehrstufig bei einer Temperatur von -50 bis 200 °C, bei einem Druck von 0,5 bis 120 bar, in Lösung, in Suspension oder in der Gasphase, in Gegenwart eines Katalysators, welcher aus einer Übergangsmetallverbindung und einem Aluminoxan besteht, dadurch gekennzeichnet, daß die Polymerisation in Gegenwart eines Katalysators durchgeführt wird, dessen Übergangsmetallverbindung eine Metallocenverbindung der Formel I ist

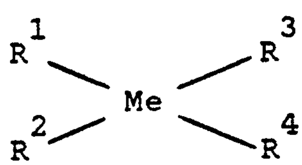

(I),

worin

$R^1$ und $R^2$ gleich oder verschieden sind und ein Halogenatom, $C_1$-$C_{10}$-Alkyl, $C_6$-$C_{10}$-Aryl, $C_2$-$C_{10}$-Alkenyl, $C_7$-$C_{40}$-Arylalkyl, $C_7$-$C_{40}$-Alkylaryl oder $C_8$-$C_{40}$-Alkenylaryl bedeuten,

$R^3$ und $R^4$ gleich oder verschieden sind und einen substituierten Cyclopentadienylrest bedeuten, wobei dieser Rest ein oder mehrere Chiralitätszentren enthält und durch Umsetzung von Alkalicyclopentadienid mit einem chiralen Alkohol entstanden ist und Me Titan, Zirkon oder Hafnium ist, und vor der Polymerisation mit einem Aluminoxan der Formel II

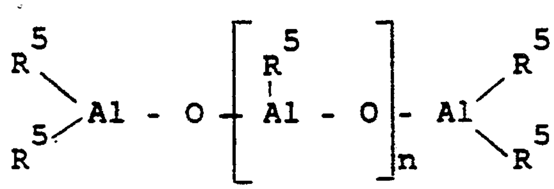

(II)

für den linearen Typ und oder ein solches der Formel III

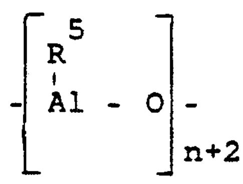

(III)

für den cyclischen Typ, wobei in den Formeln II und III $R^5$ Methyl, Ethyl oder Isobutyl bedeutet und n eine ganze Zahl von 5 bis 40 ist, bei einer Temperatur von -78 bis 100° C 5 Minuten bis 60 Minuten voraktiviert wurde, und wobei der Aktivator ebenfalls ein Aluminoxan der Formeln II oder III ist, und Wasserstoff im Molverhältnis 1-Olefin/$H_2$ von 3 bis 3000 zugegen ist.

2. Verfahren nach Anspruch 1, dadurch gekennzeichnet, daß das 1-Olefin Propylen ist.

3. Verfahren nach Anspruch 1, dadurch gekennzeichnet, daß die Metallocenverbindung eine Verbindung des Zirkons ist.

4. Verfahren nach Anspruch 1, dadurch gekennzeichnet, daß die Metallocenverbindung Bis-(neomenthylcyclopentadienyl)zirkoniumdichlorid, Bis-(neoisomenthylcyclopentadienyl)zirkoniumdichlorid oder Bis-(cis-myrtanylcyclopentadienyl)zirkoniumdichlorid ist.

**Claims**
**Claims for the following Contracting States : BE, DE, FR, GB, IT, NL**

1. A stereoblock polymer wax comprising units derived from a 1-olefin of the formula $RCH=CH_2$ in which R denotes an alkyl radical having 1 to 28 carbon atoms, having alternating isotactic sequences with an opposed configuration and having a length of 3 or more monomer units in the molecular chain, having saturated chain ends, having a molecular weight distribution $M_w/M_n$ of from 1.8 to 3.0 and having a viscosity number of from 2 to 60 $cm^3/g$, in whose preparation hydrogen is present in a 1-olefin : $H_2$ molar ratio of from 3 to 3000.

2. A process for the preparation of a 1-olefin stereoblock polymer wax as claimed in claim 1, by polymerizing a 1-olefin of the formula $R-CH=CH_2$, in which R is an alkyl radical having 1 to 28 carbon atoms, in one or more steps at a temperature of from -50 to 200° C, at a pressure of from 0.5 to 120 bar, in solution, in suspension or in the gas phase, in the presence of a catalyst comprising a transition metal compound and an aluminoxane, which comprises carrying out the polymerization in the presence of a catalyst whose transition metal compound is a metallocene compound of the formula I

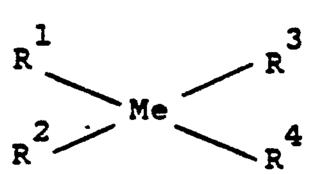

(I)

in which
$R^1$ and $R^2$ are identical or different and denote a halogen atom, $C_1$-$C_{10}$-alkyl, $C_6$-$C_{10}$-aryl, $C_2$-$C_{10}$-

alkenyl, $C_7$-$C_{40}$-arylalkyl, $C_7$-$C_{40}$-alkylaryl or $C_8$-$C_{40}$-alkenylaryl, $R^3$ and $R^4$ are identical or different and denote a substituted cyclopentadienyl radical, where this radical contains one or more centers of chirality and has been produced by reacting an alkali metal cyclopentadienide with a chiral alcohol, and Me is titanium, zirconium or hafnium, and has been preactivated before the polymerization for 5 minutes to 60 minutes at a temperature of from -78 to 100 °C using an aluminoxane of the formula II

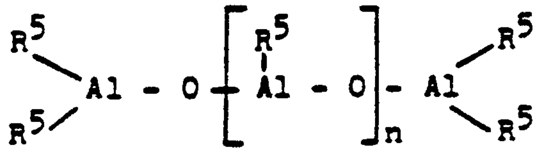

(II)

for the linear type or one of the formula III

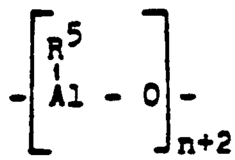

(III)

for the cyclic type, where, in the formulae II and III, $R^5$ denotes methyl, ethyl or isobutyl and n is an integer from 5 to 40, and where the activator is likewise an aluminoxane of the formula II or III, and hydrogen is present in the 1-olefin : $H_2$ molar ratio of from 3 to 3000.

**3.** The process as claimed in claim 2, wherein the 1-olefin is propylene.

**4.** The process as claimed in claim 2, wherein the metallocene compound is a compound of zirconium.

**5.** The process as claimed in claim 2, wherein the metallocene compound is bis-(neomenthylcyclopentadienyl)zirconium dichloride, bis-(neoisomenthylcyclopentadienyl)zirconium dichloride or bis-(cis-myrtanylcyclopentadienyl)zirconium dichloride.

**Claims for the following Contracting State : ES**

**1.** A process for the preparation of a 1-olefin stereoblock polymer wax comprising units derived from a 1-olefin of the formula $RCH=CH_2$ in which R denotes an alkyl radical having 1 to 28 carbon atoms, having alternating isotactic sequences with an opposed configuration and having a length of 3 or more monomer units in the molecular chain, having saturated chain ends, having a molecular weight distribution $M_w/M_n$ of from 1.8 to 3.0 and having a viscosity number of from 2 to 60 $cm^3/g$, by polymerizing a 1-olefin of the formula $R-CH=CH_2$ in which R is an alkyl radical having 1 to 28 carbon atoms, in one or more steps at a temperature of from -50 to 200 °C, at a pressure of from 0.5 to 120 bar, in solution, in suspension or in the gas phase, in the presence of a catalyst comprising a transition metal compound and an aluminoxane, which comprises carrying out the polymerization in the presence of a catalyst whose transition metal compound is a metallocene compound of the formula I

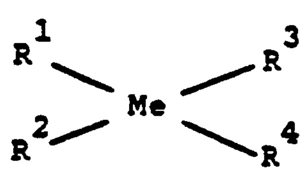

(I)

in which
$R^1$ and $R^2$ are identical or different and denote a halogen atom, $C_1$-$C_{10}$-alkyl, $C_6$-$C_{10}$-aryl, $C_2$-$C_{10}$-alkenyl, $C_7$-$C_{40}$-arylalkyl, $C_7$-$C_{40}$-alkylaryl or $C_8$-$C_{40}$-alkenylaryl,

$R^3$ and $R^4$ are identical or different and denote a substituted cyclopentadienyl radical, where this radical contains one or more centers of chirality and has been produced by reacting an alkali metal cyclopentadienide with a chiral alcohol, and Me is titanium, zirconium or hafnium, and has been preactivated before the polymerization for 5 minutes to 60 minutes at a temperature of from -78 to 100 °C using an aluminoxane of the formula II

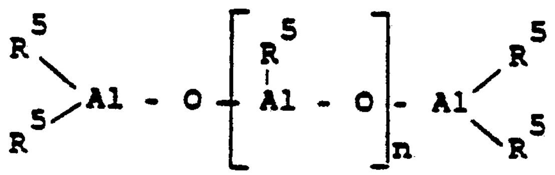

(II)

for the linear type or one of the formula III

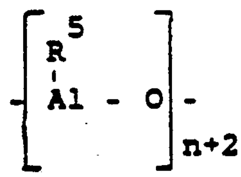

(III)

for the cyclic type, where, in the formulae II and III, $R^5$ denotes methyl, ethyl or isobutyl and n is an integer from 5 to 40, and where the activator is likewise an aluminoxane of the formula II or III, and hydrogen is present in the 1-olefin : $H_2$ molar ratio of from 3 to 3000.

**2.** The process as claimed in claim 1, wherein the 1-olefin is propylene.

**3.** The process as claimed in claim 1, wherein the metallocene compound is a compound of zirconium.

**4.** The process as claimed in claim 1, wherein the metallocene compound is bis-(neomenthylcyclopentadienyl)zirconium dichloride, bis-(neoisomenthylcyclopentadienyl)zirconium dichloride or bis-(cis-myrtanylcyclopentadienyl)zirconium dichloride.

**Revendications**
**Revendications pour les Etats contractants suivants : BE, DE, FR, GB, IT, NL**

**1.** Cire de polymère à stéréoblocs (séquences à stéréo-configurations particulières), consistant en des motifs qui dérivent d'une alpha-oléfine de formule $RCH=CH_2$ (dans laquelle R représente un reste alkyle ayant 1 à 28 atomes de carbone), avec des séquences présentant en alternance une configuration isotactique opposée et ayant une longueur de trois ou plus de trois motifs monomères dans la chaîne de molécule , avec des extrémités saturées des chaînes, cette cire de polymère présentant une répartition des masses molaires $M_p/M_n$ de 1,8 à 3,0 et un indice de viscosité de 2 à 60 $cm^3/g$, avec, pendant leur préparation, présence d'hydrogène selon un rapport molaire alpha-oléfine/$H_2$ compris entre 3 et 3000.

**2.** Procédé pour préparer une cire de polymère à stéréoblocs d'alpha-oléfines selon la revendication 1, par polymérisation d'une alpha-oléfine de formule $R\text{-}CH=CH_2$ (dans laquelle R représente un reste alkyle ayant 1 à 28 atomes de carbone), en une ou plusieurs étapes à une température comprise entre -50 ° et +200 °C, sous une pression de 0,5 à 120 bars, en solution, en suspension ou en phase gazeuse, en présence d'un catalyseur qui consiste en un composé de métal de transition et en un aluminoxane, procédé caractérisé en ce qu'on conduit la polymérisation en présence d'un catalyseur dont le composé de métal de transition est un métallocène de formule I :

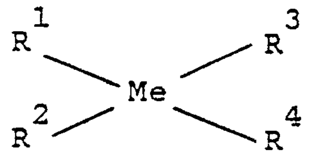

(I),

(dans laquelle $R^1$ et $R^2$ sont identiques ou différents et représentent chacun un atome d'halogène, un groupe alkyle en $C_1$ à $C_{10}$, aryle en $C_6$ à $C_{10}$, alcényle en $C_2$ à $C_{10}$, arylalkyle en $C_7$ à $C_{40}$, alkylaryle en $C_7$ à $C_{40}$ ou alcénylaryle en $C_8$ à $C_{40}$),
$R^3$ et $R^4$ sont identiques ou différents et représentent chacun un reste cyclopentadiényle substitué, ce reste contenant un ou plusieurs centres de chiralité et étant obtenu par réaction d'un cyclopentadiénure alcalin avec un alcool chiral, et Me représentant le titane, le zirconium ou l'hafnium) et le catalyseur ayant été soumis, avant la polymérisation, à une activation préliminaire à une température de -78 jusqu'à 100 °C, durant cinq à soixante minutes, avec un aluminoxane de formule II :

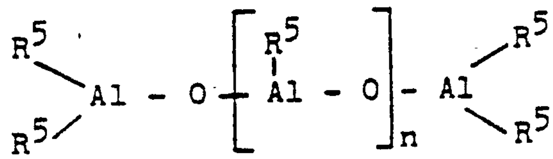

(II)

pour le type linéaire ou avec un aluminoxane de formule III :

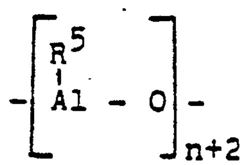

(III)

pour le type cyclique, et, dans les formules II et III, $R^5$ représente un groupe méthyle, éthyle ou isobutyle, et n est un nombre entier valant 5 à 40,
et l'activateur étant également un aluminoxane répondant aux formules II ou III, et l'hydrogène est présent en un rapport molaire alpha-oléfine/$H_2$ compris entre 3 et 3000.

3. Procédé selon la revendication 2, caractérisé en ce que l'alpha-oléfine est le propylène.

4. Procédé selon la revendication 2, caractérisé en ce que le métallocène est un composé du zirconium.

5. Procédé selon la revendication 2, caractérisé en ce que le métallocène est le dichlorure de bis-(néomenthylcyclopentadiényl)-zirconium, le dichlorure de bis-(néoisomenthylcyclopentadiényl)-zirconium ou le dichlorure de bis-(cis-myrtanylcyclopentadiényl)-zirconium.

**Revendications pour l'Etat contractant suivant : ES**

1. Procédé pour préparer une cire de polymère à stéréoblocs d'alpha-oléfines, consistant en des motifs qui dérivent d'une alpha-oléfine de formule $RCH=CH_2$ (dans laquelle R représente un reste alkyle ayant 1 à 28 atomes de carbone), avec des séquences présentant alternativement une configuration isotactiquement opposée ayant une longueur de 3 ou plus de 3 motifs monomères dans la chaîne de molécules, avec des extrémités saturées de chaînes présentant une répartition des masses molaires $M_p/M_n$ comprises entre 1,8 et 3,0 et ayant un indice de viscosité compris entre 2 et 60 $cm^3/g$, par polymérisation d'une alpha-oléfine de formule $R\text{-}CH=CH_2$ (dans laquelle R représente un reste alkyle ayant 1 à 28 atomes de carbone), en une ou plusieurs étapes à une température comprise entre -50 ° et +200 ° C, sous une pression de 0,5 à 120 bars, en solution, en suspension ou en phase gazeuse, en présence d'un catalyseur consistant en un composé de métal de transition et en un aluminoxane, procédé caractérisé en ce qu'on conduit la polymérisation en présence d'un catalyseur dont le

composé de métal de transition est un métallocène de formule I :

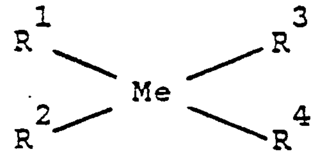 (I),

(dans laquelle $R^1$ et $R^2$ sont identiques ou différents et représentent chacun un atome d'halogène, un groupe alkyle en $C_1$ à $C_{10}$, aryle en $C_6$ à $C_{10}$, alcényle en $C_2$ à $C_{10}$, arylalkyle en $C_7$ à $C_{40}$, alkylaryle en $C_7$ à $C_{40}$ ou alcénylaryle en $C_8$ à $C_{40}$),
$R^3$ et $R^4$ sont identiques ou différents et représentent chacun un reste cyclopentadiényle substitué, ce reste contenant un ou plusieurs centres de chiralité et étant obtenu par réaction d'un cyclopentadiénure alcalin avec un alcool chiral, et Me représentant le titane, le zirconium ou l'hafnium) et le catalyseur ayant été soumis, avant le polymérisation, à une activation préliminaire à une température de -78 jusqu'à 100 °C, durant cinq à soixante minutes, avec un aluminoxane de formule II :

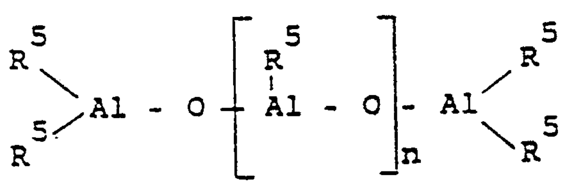 (II)

pour le type linéaire ou avec un aluminoxane de formule III :

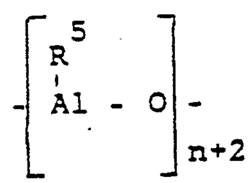 (III)

pour le type cyclique, et, dans les formules II et III, $R^5$ représente un groupe méthyle, éthyle ou isobutyle, et n est un nombre entier valant 5 à 40,
et l'activateur étant également un aluminoxane répondant aux formules II ou III, et l'hydrogène est présent en un rapport molaire alpha-oléfine/$H_2$ compris entre 3 et 3000.

2. Procédé selon la revendication 1, caractérisé en ce que l'alpha-oléfine est le propylène.

3. Procédé selon la revendication 1, caractérisé en ce que le métallocène est un composé du zirconium.

4. Procédé selon la revendication 1, caractérisé en ce que le métallocène est le dichlorure de bis-(néomenthylcyclopentadiényl)-zirconium, le dichlorure de bis-(néoisomenthylcyclopentadiényl)-zirconium ou le dichlorure de bis-(cis-myrtanylcyclopentadiényl)-zirconium.